# EUROPEAN PATENT APPLICATION

(11) **EP 2 736 154 A1**
(43) Date of publication of application: **28.05.2014**
(21) Application number: 12193584.5
(22) Date of filing: 21.11.2012
(51) Int. Cl.: H02K 21/12, H02K 1/18, H02K 7/10, H02K 7/102, H02K 9/19, H02K 16/04, H02K 7/18

(54) **Dual stator permanent magnet generator for a wind turbine**

(71) Applicant: Siemens Aktiengesellschaft, 80333 München (DE)
(72) Inventor: Lemma, Edom, 7330 Brande (DK)

(57) **Abstract**

It is described a dual stator permanent magnet generator (100) for a wind turbine. The generator (100) comprises an inner stator assembly (102) having a first surface and a second surface opposite the first surface, an outer stator assembly (101) having a first surface and a second surface opposite the first surface, and a rotating assembly (103) having a first surface and a second surface opposite the first surface and being arranged between the inner stator assembly and the outer stator assembly. The second surface of the inner stator assembly comprises recesses (104) for receiving windings and wherein the second surface of the inner stator assembly faces the rotating assembly. The first surface of the outer stator assembly comprises recesses (104) for receiving windings and wherein the first surface of the inner stator assembly faces the rotating assembly. The first and the second surface of the rotating assembly are configured to receive permanent magnet module elements (105) in order to induce currents in the windings of the inner stator assembly and the outer stator assembly during a rotation of the rotating assembly.

## Description

### Field of invention

The present invention relates to a generator comprising a dual stator and a rotor with permanent magnets. Such a generator may be used in particular for wind turbines. The present invention relates further to a method of manufacturing such a generator.

### Art Background

In the field of wind turbines, direct drive generators with a permanent magnet generator topology can be used. Such a generator may have an outer rotor with an inner stator and with one bearing located upwind. For larger multi-mega watt applications, the electromagnetic design requires that the air gap pitch diameter (distance from center of rotor to the location of center of air gap) should be large.

The electromagnetic air gap diameter is responsible for the diameter of the rotor and stator assemblies. Hence, the larger the air gap requirement or demand is, the larger the diameters of the rotor and stator assemblies become. These diameters increase with increasing power output of the generator. The increase in diameters imposes manufacturing problems for rotor housing and also for stator assembly construction. The machining size of the rotor house (which holds the magnets in a permanent magnet generator) increases and hence any machines that can handle the rotor will be limited for supplier sourcing and also provides difficulties in view of manufacturing. The stock materials for rotor housing are also limited to purchase and even if there are welding methods that would enable larger structures for machining, it would be increasingly more difficult to perform large welding. The dimensional controls of the rotor housing would also be very difficult as the larger the diameter rotor housing is the relaxed are the geometric dimensioning and tolerance controls. Even if certain machining equipments can be custom made, cost competitiveness may be very difficult for future attempts to break into direct drive wind turbine platform.

Stator plates that would hold the stator segments are also made of welding and need to be machined accordingly. The machining process is also difficult just like the rotor house due to larger diameters. Hence, for future large multi-mega watt wind turbines, it is required that the size of the generator be kept manageable. To achieve this, it is required that a generator assembly produces larger power with the same dimensional footprint of a smaller generator.

Large power output direct drive wind turbines are currently designed with increasing the electromagnetic air gap diameter of the generator. Whenever a larger power output of a wind turbine is required, a new electromagnetic analysis is done and would require increasing the air gap diameter. Another option of increasing a power output of a generator is to increase the axial length of the active stator and rotor part. The axial increase corresponds to an increase in the tilting length of the direct drive generator. Hence, an axial length is not usually implemented. For instance, the power output of a permanent magnet generator is more or less directly proportional to the cubic of the air gap diameter and the axial length of the active generator components for constant speed considerations. For future large wind turbines, where a directly proportional increase in the air gap would not be acceptable, such dual electromagnetic circuit in a single machine are required to meet demands in increased power production.

Thus, there may be a need for an improved arrangement of rotor and stator within a generator being able to produce larger power without a need for increasing the size of the air gap or other parts of the generator.

### Summary of the Invention

This need may be met by the subject matter according to the independent claims. Advantageous embodiments of the present invention are described by the dependent claims.

According to an embodiment, there is provided a dual stator permanent magnet generator for a wind turbine. The generator comprises an inner stator assembly having a first surface and a second surface opposite the first surface, an outer stator assembly having a first surface and a second surface opposite the first surface, and a rotating assembly having a first surface and a second surface opposite the first surface and being arranged between the inner stator assembly and the outer stator assembly, wherein the second surface of the inner stator assembly comprises recesses for receiving windings and wherein the second surface of the inner stator assembly faces the rotating assembly, wherein the first surface of the outer stator assembly comprises recesses for receiving windings and wherein the first surface of the inner stator assembly faces the rotating assembly, and wherein the first and the second surface of the rotating assembly are configured to receive permanent magnet module elements in order to induce currents in the windings of the inner stator assembly and the outer stator assembly during a rotation of the rotating assembly.

This embodiment is based on the idea that, for large multi-mega watt wind turbines, it may be required that the size of a generator is kept manageable. To achieve this, it may be required that a generator assembly produces larger power with the same dimensional footprint of a smaller generator. This can be achieved with dual stator and a single rotor of a permanent magnet generator assembly as described above. The size limits would not be an issue and current machining and dimensional tolerances can be kept while increasing the power output of the generator. The power density of such a construction would be very high and hence the cost competitiveness, ease of manufacturing, ease of assembly and convenience of providing power would be enhanced.

The generator according to the here described embodiment may have the following features. The generator may have a dual stator configuration in terms of construction. This means that there may be a physical presence of two separate stator assemblies and a single rotating assembly. The stator assembly seen from the outside is referred here as an outer stator assembly and likewise the stator assembly seen from the fixed shaft of the assembly is termed here as inner stator assembly. The dimensions of the outer and inner stator laminations can be defined with an electromagnetic design and optimization for a power rating. The windings of the inner and outer stator segments may be arranged so that the direction of rotation of the rotor would induce same directional currents from its terminals.

The rotating assembly may comprise magnets on each side of its faces to complete electromagnetic circuits for the outer and inner stator assemblies. The back iron of the rotor may be dimensioned, for instance be large enough, to allow space for both outer and inner electromagnetic circuits. That means that the thickness of the rotor house may be such that the magnetic flux lines of the outer and inner electromagnetic circuits may be kept separate. The magnets on the face of the rotor can also be made skewed to reduce total torque ripple in the generator which would otherwise generate vibration and noise. The rotor may have two inclined (or optionally can be made in any angle including a 90 degree) front plates designed to transfer the torque to the rotor assembly from the rotor hub. An inner flange may be provided to the inner diameter of the rotor to mount a brake disc which would enable braking during turbine field operation. The rotor house may be also fitted with magnet clamps which may enable accurate axial positioning of the magnets and which may be very easy to manufacture and assemble.

According to an embodiment, the inner stator assembly and the outer stator assembly each comprise a cooling element for providing a liquid cooling to the stator assemblies.

Both stator assemblies may utilize a liquid cooling integral to the stator assemblies or segments. A liquid cooling and stator segment construction method may be used as described in the patent application EP 12170526. The cooling element may provide a cooling of the windings.

According to a further embodiment, the inner stator assembly and the outer stator assembly each comprise a cooling support element as cooling element, wherein each cooling support element comprises a first plate having an upper surface and a lower surface, wherein the upper surface of the first plate comprises anchoring means for anchoring a stator lamination stack being attachable to the cooling support element, a second plate having an upper surface and a lower surface, wherein the lower surface of the second plate comprises an inlet opening and an outlet opening, wherein the first plate is attached to the second plate in such a manner that the lower surface of the first plate faces the upper surface of the second plate, wherein separator elements are disposed between the lower surface of the first plate and the upper surface of the second surface such that a cooling channel is provided between the first plate and the second plate, and wherein a cooling fluid is guidable from the inlet opening through the cooling channel to the outlet opening for dissipating heat from the stator lamination stack, wherein the first surface of the inner stator assembly is part of the cooling element of the inner stator assembly and wherein the second surface of the outer stator assembly is part of the cooling element of the outer stator assembly.

According to this embodiment, a support element may be used on which a stator lamination stack (which provides the recesses for receiving the windings) may be mounted, wherein the support element also provides a cooling functionality. According to this embodiment, a simple and efficient method is introduced to support or mount a stator lamination stack and, at the same time, to cool this stator lamination stack.

This arrangement may be used for the inner stator assembly and the outer stator assembly. Such an arrangement is for instance described in EP 12170526. The described cooling support element provides cooling of stator segments, e.g., the stator lamination stack and windings arranged on the stator lamination stack. The cooling function presented herein may enable cooler machine performance without the need for large air to air heat exchangers. The described cooling support element may provide a stator cooling mechanism with integration to the wind turbine cooling. Each cooling support element may be arranged on the side of each stator assembly away from the rotating assembly.

The uneven flow of cooling air in common systems may cause uneven machine performance regarding temperature and may require larger fan powers to address hot spots especially in the end windings. The axial cooling channels provided in the stator stack may reduce the structural integrity of the segments, which the liquid cooling provided by the herein described cooling support element may eliminate.

The flow of the liquid through the cooling channel may be varied so that a variable flow can be arranged and hence controls can be integrated to optimize cooling depending on machine power output (with or without sensor less controls).

The here described cooling support element may be used for a stator segment, wherein each stator assembly may comprise a plurality of segments. The cooling channel of the cooling support element may thus be manufactured and produced with each segment and only piping connection is required during stator assembly. As cooling fluid, water or any other fluid, for instance water or a glycol mixture, may be used. A glycol mixture is preferred due to anti freeze properties at reduced operating temperatures. Based on the cooling fluid flow and with an optimized channel height and width, hence the necessary convective coefficients are generated.

"Stator lamination stack" in this context may refer to the part of the stator providing recesses for receiving windings. This part of the stator may be formed by stacking a plurality of thin pieces of silicon steel plate elements.

According to a further embodiment, the cooling elements are connectable to at least one pumping station being arrangeable inside the inner stator assembly.

Pumping stations for both inner and outer stator segments can be placed inside the inner stator assembly. The water cooling may be done in the turbine's radiator outside the turbine. Thus, the generator may be a totally enclosed water to air cooled system.

According to a further embodiment, the dual stator permanent magnet generator further comprises a stator assembly anchor plate being adapted to attach the stator assemblies to a main shaft of the generator.

A stator assembly anchor plate may be provided to positively attach the stator assembly to the main shaft. The stator anchor plate can be a single cast piece or also can be made in separate piece and even per each segment construction. The stator assembly anchor plate may comprise attachment means for attaching the stator assemblies to the main shaft.

According to a further embodiment, the stator assembly anchor plate comprises attachment means being adapted to match with corresponding attachment means of the stator assemblies.

The attachment means may be any kind of fixing or attachment means like holes, screws or the like.

According to a further embodiment, the attachment means are tapped bolt holes and/or dowel pin holes and/or through bolt holes.

For instance, according to one embodiment, the anchor plate may comprise tapped bolt holes and dowel pin holes and the stator assemblies may comprise dowel pin holes and through bolt holes. In one case, the anchor plate may be provided with three rows of tapped bolt holes and dowel pin holes. However, the number of rows may also be adjusted according to the specific generator design.

The outer most bolt hole and dowel pin row may be used by the outer stator assembly, the middle bolt hole and dowel pin row may be used by the inner stator assembly and the inner most rows may be used to fix the anchor plate to the main shaft. The anchor plate may be provided with two rows of man holes. The outer most rows may be used to assembly magnets after the marriage between the stator and rotor assembly has been done.

Both the outer and inner stator segments may also be provided with both dowel pin holes and through bolt holes. The dowel pin holes may enable to transfer most of the torque from the stator assembly to the stator anchor plate. These dowel pins may be very effective in transferring shearing forces. The bolt holes may be used to keep the stator segment in place keeping the air gap and also to ensure positive contact to the stator anchor plate.

According to a further embodiment, the stator assembly anchor plate comprises openings for inserting permanent magnets into the generator.

Several openings may be provided to enable simultaneous magnet insertion by more than one operator. For instance, the outer most rows may be used for this. The rotor may be rotated in a given direction while the magnet assembly process is undertaken.

According to a further embodiment, the stator assembly anchor plate comprises further openings for accessing the generator from the non-drive end.

For instance, the inner most row may be used to access the generator from the non drive end. This may be useful for maintenance workings.

According to a further embodiment, the dual stator permanent magnet generator further comprises a brake disc being arranged on the front end of the rotating assembly for braking and/or locking the generator during operation.

A brake disc may be provided on the front end of the rotor assembly for braking and/or locking the generator during operation. A large bracket may be provided to hold the brake calipers and the rotor locking pins. This bracket can vary in shape, size and form.

According to a further embodiment, the inner stator assembly and the outer stator assembly are electromagnetically driven to provide two separate generators.

The outer and inner stator assemblies could be operated as two separate generators and hence their connection could be set to different converters in a single turbine.

According to a further embodiment, the inner stator assembly and the outer stator assembly are electromagnetically driven as one generator.

The Back Electromotive Force (BEMF) which drives the voltage at the terminals of a stator assembly may be set to be equal and the voltages from both the stator segments may be made equivalent. The decision to design the outer and inner electromagnetic circuits with one BEMF may be made based on an optimization study. Optionally, like mentioned above, the stator assemblies can be treated different and the outputs of both stator assemblies can be dealt with different sets of converters in the turbine.

According to a further embodiment, the inner stator assembly, the outer stator assembly and the rotating assembly are each formed as a plurality of segments.

This embodiment may provide an easy and efficient way of manufacturing the assemblies. Each assembly may be manufactured in a plurality of segments and may be mounted together during manufacturing of the wind turbine.

According to a further embodiment, the inner stator assembly, the outer stator assembly and the rotating assembly are arranged such that a first airgap is provided between the inner stator assembly and the rotating assembly and a second airgap is provided between the outer stator assembly and the rotating assembly.

Thus, instead of increasing the airgap between rotor and stator two airgaps are used. This may allow to have smaller dimensions of the generator as also described above.

According to a further aspect, a method of manufacturing a dual stator permanent magnet generator for a wind turbine is provided. The method comprises providing an inner stator assembly having a first surface and a second surface opposite the first surface, providing an outer stator assembly having a first surface and a second surface opposite the first surface, and providing a rotating assembly having a first surface and a second surface opposite the first surface and being arranged between the inner stator assembly and the outer stator assembly, wherein the second surface of the inner stator assembly comprises recesses for receiving windings, wherein the first surface of the outer stator assembly comprises recesses for receiving windings, arranging the inner stator assembly such that the second surface of the inner stator assembly faces the rotating assembly, and arranging the outer stator assembly such that the first surface of the inner stator assembly faces the rotating assembly, wherein the first and the second surface of the rotating assembly are configured to receive permanent magnet module elements in order to induce currents in the windings of the inner stator assembly and the outer stator assembly during a rotation of the rotating assembly.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of method type claims and features of apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings to which the invention is not limited.
Fig. 1 illustrates a segment of a dual stator permanent magnet generator according to an embodiment;
Figs. 2 to 5 illustrate a segment of the outer stator assembly according to an embodiment;
Figs. 6 to 9 illustrate a segment of the inner stator assembly according to an embodiment;
Figs. 10 to 12 illustrate a stator assembly anchor plate according to an embodiment;
Fig. 13 illustrates a brake according to an embodiment;
Fig. 14 illustrates a main shaft according to an embodiment;
Figs. 15 to 17 illustrate a stator assembly comprising the inner stator assembly, the outer stator assembly, the main shaft, the stator assembly anchor plate and the brake of the Figures 2 to 14;
Fig. 18 illustrates a rotating assembly according to an embodiment;
Fig. 19 a magnet module assembly for the rotating assembly of Fig. 18;
Figs. 20 and 21 illustrate magnet anchors for the magnet module of Fig. 19;
Figs. 22 and 23 illustrate a brake disc according to an embodiment.

### Detailed Description

The illustration in the drawings is in schematic form. It is noted that in different figures, similar or identical elements are provided with the same reference signs.

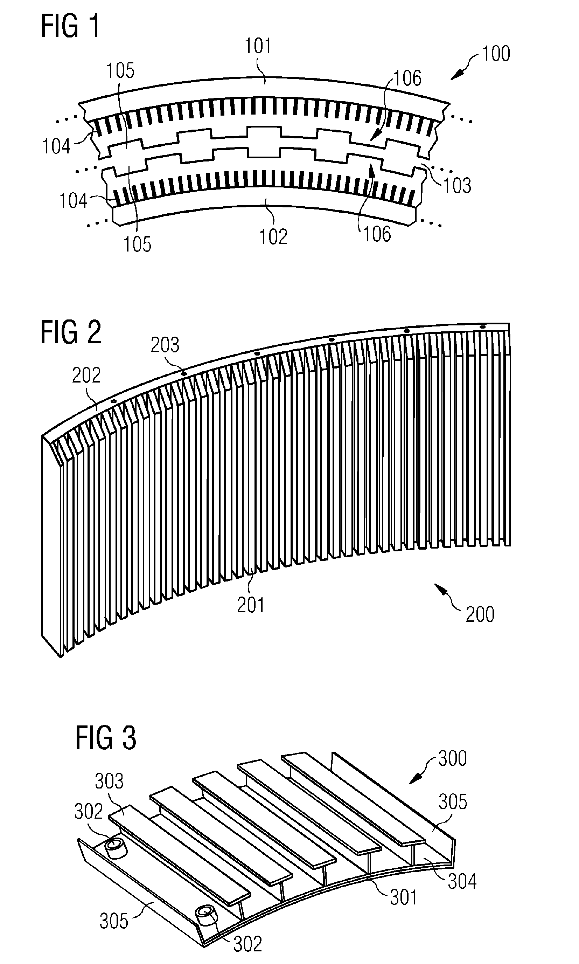

Fig. 1 illustrates a dual stator permanent magnet generator for a wind turbine according to an embodiment. For clarity, the generator is shown as a segment. The generator 100 comprises an inner stator assembly 102 having a first surface and a second surface opposite the first surface, an outer stator assembly 101 having a first surface and a second surface opposite the first surface, and a rotating assembly 103 having a first surface and a second surface opposite the first surface and being arranged between the inner stator assembly and the outer stator assembly.

The second surface of the inner stator assembly 102 comprises recesses 104 for receiving windings. The second surface of the inner stator assembly 102 faces the rotating assembly 103. An airgap 106 is provided between the inner stator assembly 102 and the rotating assembly 103.

The first surface of the outer stator assembly 101 comprises recesses 104 for receiving windings. The first surface of the outer stator assembly 101 faces the rotating assembly. An airgap 106 is provided between the outer stator assembly 101 and the rotating assembly 103.

The first and the second surface of the rotating assembly 103 are configured to receive permanent magnet module elements 105 in order to induce currents in the windings of the inner stator assembly and the outer stator assembly during a rotation of the rotating assembly.

A step by step assembly of the dual stator permanent magnet generator is provided in the following.

First a full stator assembly should be constructed. This involves assembly of a number of inner and outer stator segments to the stator anchor plate. The assembly of the stator segments may be done with dowel pins and screws (or bolt and nut features). The sub-assembly is then mounted onto the main shaft, for instance with bolt and nuts. Here an addition of dowel pins can be added for increased torque transfer to ground. This assembly would constitute a stator subassembly for later assembly with the rotor to create the dual stator generator. Electrical connection for the inner stator segments can be done from the drive end of the generator. Here, there is enough spacing for end winding connection and also a bus bar connection can be routed to the converters with wire route paths. An optional non-drive end bus bar connection can be made with opening on the stator anchor plate.

The outer stator segment electrical connection should also be done on the drive end by the same logic of the inner stator segments. The space provided at the drive end is large and hence also bus bar connections and an electrical route can be easily designed to drive the electrical lines to the converters as the outer part is basically stationary.

A lock and brake bracket may be also assembled on to the flange provided for it. This should then be populated with hydraulic rotor locks and hydraulic brake calipers for breaking the rotor assembly from the brake disc. After the marriage of the rotor and stator sub-assemblies, the brake and lock bracket may be assembled with the required brake calipers and rotor locks.

A second step may involve assembly of the rotor sub-assembly. This may assume magnet module and rotor house prefabrication. The machined and prepared rotor house is fitted with the main bearing which is usually a double row tapered roller bearing. This assembly is also fitted with the brake disc from the inside of the rotor house. After this, the rotor house sub-assembly should more or less be ready for connection to the stator subassembly.

The connection or "marriage" of the rotor and stator sub-assemblies may be undertaken by lying the stator assembly on a perfectly flat surface with its non drive end (side of the main shaft that bolts to the bed frame) resting. This may give enough clearance to bolt the inner race of the main bearing to the main shaft. The rotor sub-assembly may be slowly and gently lowered into the dual stator sub-assembly and its main bearing bolted to the main shaft. By main bearing, here the inner race may be bolted to the main shaft of the stator assembly. This should positively secure the rotor sub-assembly in radial and axially position relative to the stator assembly.

A next step may involve the assembly of the magnet modules and for this reason the sub-assembly may be turned onto the main bearing side of the generator. This way, the access windows on the stator anchor plate may be visible on the top surface as the rotor is lying on the bearing side. The magnet assembly can be done with a number of operators or just one. Two access windows that are diametrically opposed may be selected and assembly may start from these access windows. The magnet insertion is basically sliding the magnet modules on to the rotor house surface on both the inner and outer surface. If the electromagnetic design indicates the requirement of two types of magnet modules for the inner and outer stator, markings would be done to the respective magnet modules. The magnets are slid in to fill the axial gap indicated in each magnet slot. When one row of magnet assembly (by row it means one row of inner and outer magnets), a magnet anchor may be bolted onto the rotor house surface to keep the magnet modules in axial position at all times. The same procedure may be done by two operators at the same time.

When one row of magnet assembly is completed, the rotor house may be rotated and an adjacent row may be accessed for assembly. The same procedure may be followed to assembly all rows of the rotor house with magnets.

The brake and lock bracket may then be assembled with the rotor locks and brake calipers that may be required for the safe operation of the turbine. Hydraulic and electrical connections may be also done after the lock and brake units are assembled. After this is done, a complete dual stator generator has been manufactured. In a wind turbine, the generator is mounted onto a bed frame on the non-drive end and a rotor hub with blades on the drive end.

Since it is intended to keep the generator a completely closed generator with an international protection code of more than IP54, it may be required that a spinner be extended to cover the outer stator assembly. A spinner is a cover that is mounted on top of a rotor hub that covers most of the rotor hub and its connection to the stator assembly. The spinner when extended is required to be at least up to the canopy fiber glass where a seal of some form is mounted to repel the inlet of water and foreign materials. The construction of the spinner is entirely dependent on platform of the wind turbine and hence is subject to variations.

In the following, the assembly of the different parts of the dual stator permanent magnet generator will be described.

The outer stator assembly (200, 300, 400, 500) construction is illustrated in Figs. 2 to 5. The basic construction is the same as a stator lamination piece of an inner rotor permanent magnet machine. The slots 201 are punched out from the inner diameter of the lamination pieces 202. The outer stator segment construction has its own cooling element. The cooling element and overall construction corresponds to the cooling element of EP 12170526.

The outer stator assembly comprises an upper plate 304. Port connections 302 will be welded to the upper side of the plate for inlet and outlet of the coolant liquid. Flow separators are arranged between the upper plate 304 and a lower plate 301. These separators are arranged between the plates to provide a cooling channel in the cooling support element of the outer stator assembly. Side bars 305 are used for closing the cooling channel.

T-bars 303 may be welded on the upper part 304 of the cooling support element to give the necessary strength to the stator assembly. The final assembly 300 has a cooling channel with drive end and non drive end open. The cooling support element as shown in Fig. 3 can be used as a stacking barrel for the stator stacking process.

As shown in Fig. 2, the lower part 200 of the outer stator assembly may form a stacking barrel that will be used during stator stacking and assembly and which can be mounted or attached to the cooling support element of Fig. 3.

The stacking process of the lamination will start with one pressure plate placed and the cooling support element welded to the pressure plate. This will ensure a perpendicular stacking point for the assembly. The pressure plates can be formed from steel plates or any equivalent material. In addition, the pressure plates comprise a pilot diameter 203 which is machined into the plates for piloting the stacking barrel. The piloting will enable better control of the tolerance stack ups and also play part in structural linking of the stator segments.

The pressure plates comprise fingers or teeth 201 for the windings. Further, they comprise holes for fixing the cooling support element and for coupling the two pressure plates together.

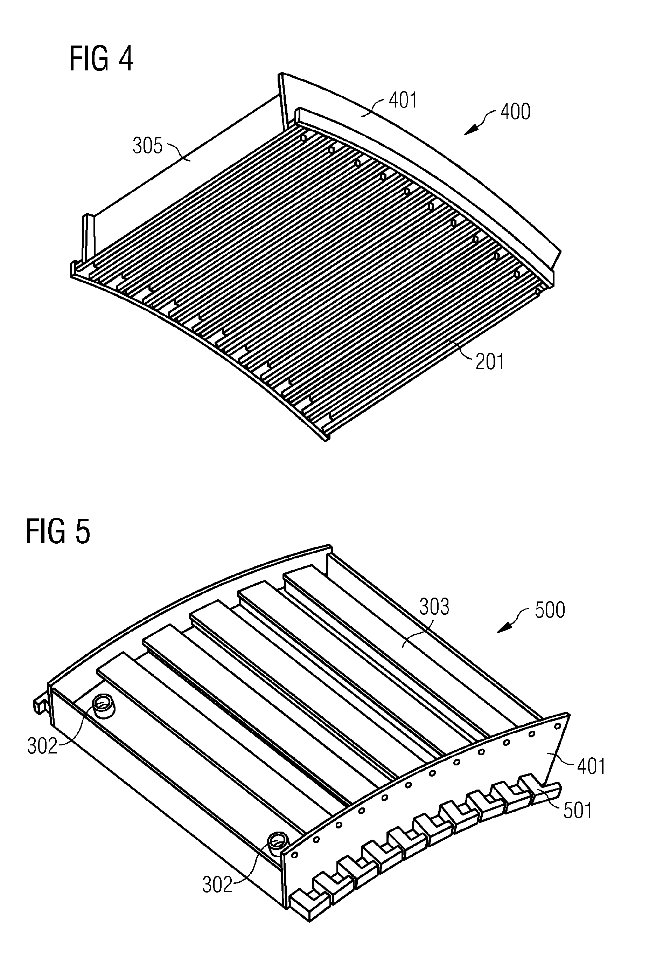

As shown in Fig. 4, the outer stator assembly comprises an endplate 401. End sections 501 of the windings extend from the stator assembly as shown in Fig. 5.

The piping connection of the liquid cooling are done on the outside and provisions should be provided on the stator anchor plate or cover of the stator segment to route cooling flexible pipes to the inside of the generator where pumping terminals will be situated. The inlet port can be the opening closest to the non-drive end of the generator for convenience.

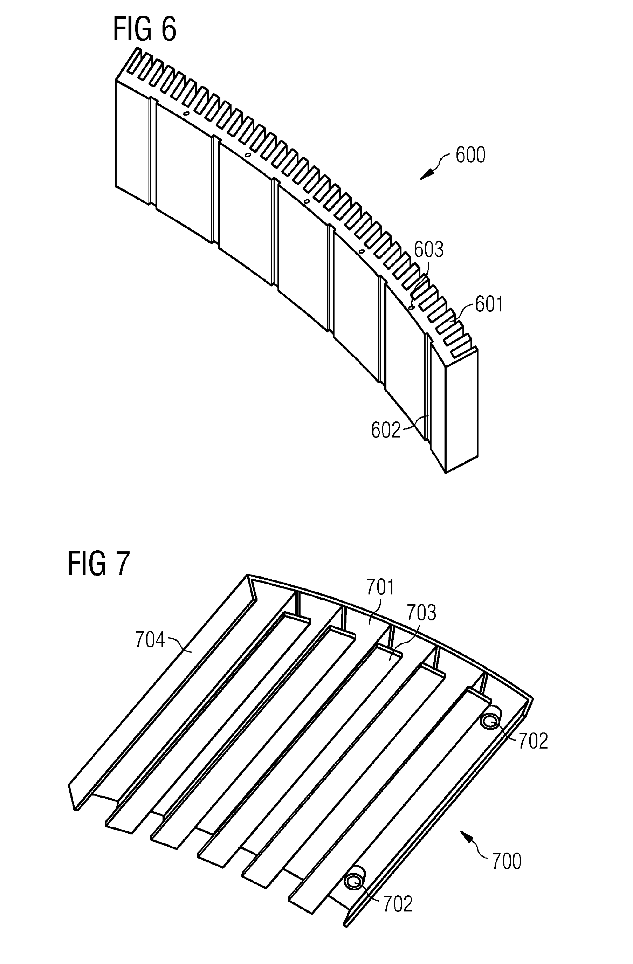

The inner stator (segment) assembly as shown in Figs. 6 to 9 resembles that of an outer rotor permanent magnet machine construction. The slots 601 of the stator lamination are punched out on the outer diameter of the stator lamination. The stator laminations comprise attachment means 602 for attaching the lamination stack to the cooling support element.

The cooling support element for this segment is basically the same as the one described for the outer stator assembly. The elements of the outer and the inner stator assembly are mirrored. As can be seen, the inner stator assembly also comprises a lower plate 701. Port connections 702 will be welded to the lower side of the plate for inlet and outlet of the coolant liquid. Flow separators are arranged between an upper plate and the lower plate 701. These separators are arranged between the plates to provide a cooling channel in the cooling support element of the outer stator assembly. Side bars 704 are used for closing the cooling channel.

T-bars 703 may be welded on the lower part 701 of the cooling support element to give the necessary strength to the stator assembly. The final assembly 700 has a cooling channel with drive end and non drive end open. The cooling support element as shown in Fig. 7 can be used as a stacking barrel for the stator stacking process.

As shown in Fig. 6, the upper part 600 of the inner stator assembly may form a stacking barrel that will be used during stator stacking and assembly and which can be mounted or attached to the cooling support element of Fig. 7.

The stacking process can be done as described above.

The pressure plates comprise fingers or teeth 601 for the windings. Further, they comprise holes 603 for fixing the cooling support element and for coupling the two pressure plates together.

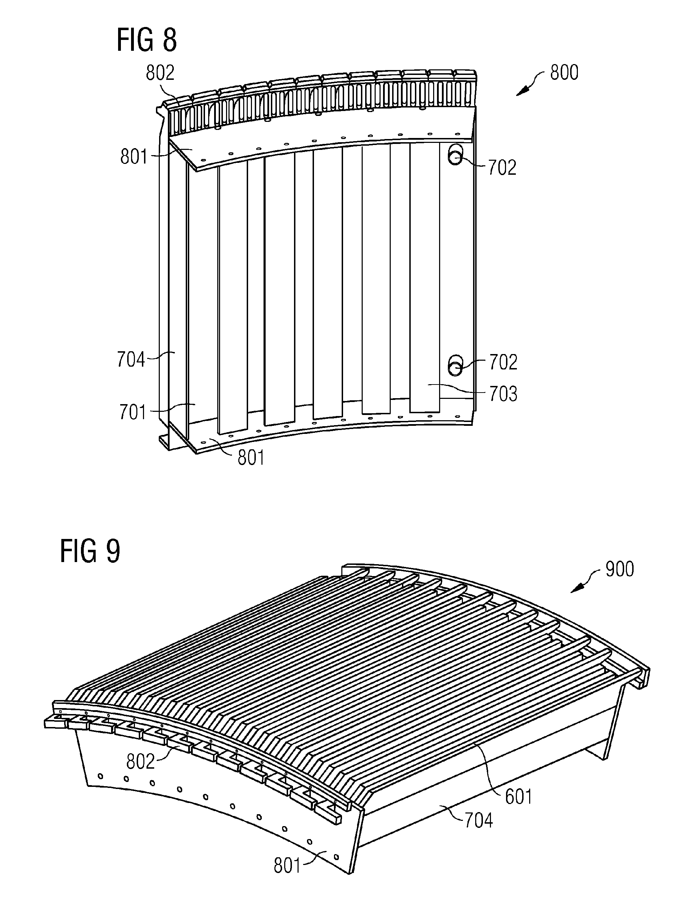

As shown in Fig. 8, the inner stator assembly comprises end-plates 801. End sections 802 of the windings extend from the stator assembly 800, 900 as shown in Figs. 8 and 9.

The piping connection of the liquid cooling are done on the outside and provisions should be provided on the stator anchor plate or cover of the stator segment to route cooling flexible pipes to the inside of the generator where pumping terminals will be situated. The inlet port can be the opening closest to the non-drive end of the generator for convenience.

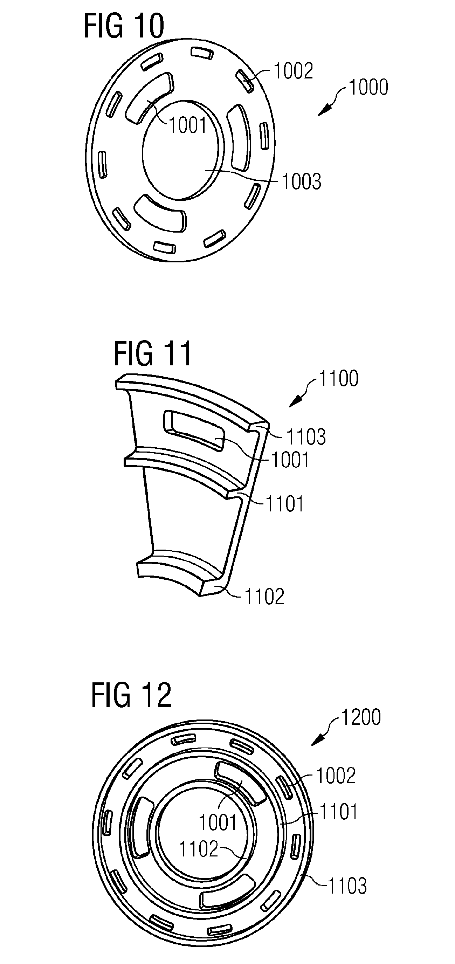

Figs. 10 to 12 illustrate the stator anchor plate 1000, 1200, wherein Fig. 11 illustrates a segment 1100 of the stator anchor plate. The stator anchor plate is used to hold the outer and inner stator segments in space.

This plate can be cast in one piece as shown or also can be segmented per each stator segment to make manufacturing and assembly easier. Tighter tolerance and dimensional controls may be required if segmenting is done and a flange 1101, 1102, 1103 should be provided to hold each segment together in the radial direction. In both configurations, the plate is provided with two rows of openings 1002, 1003. The first (outer most) row 1002 of openings is provided to guide in the magnet assembly. The magnet modules are slid in these holes and the magnet anchor may then be bolted to the rotor house. The width and height of the openings can be determined for a specific magnet dimensions and handling of tools. The number of the openings is also optimized for a specific assembly procedure and ease of assembly. The second row 1002 of openings is provided as a manhole to access the inside of the generator which number and size can be determined according to specific requirements. The inner most hole 1003 is used for inserting the main shaft.

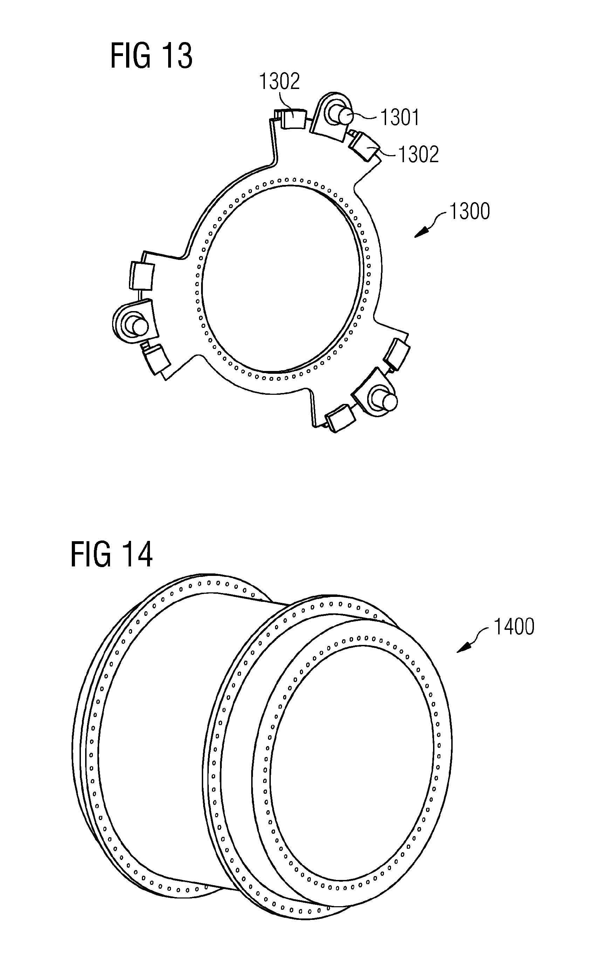

In Fig. 13, a brake and lock bracket 1300 is disclosed. The rotor locks are assembled on a bracket that will be mounted on the lock and brake bracket. For instance, the number of the rotor locks 1301, 1302 may be set to three rotor locks per turbine. The brake calipers are also situated right next to the rotor locks on the lock and brake bracket. The brake calipers are hydraulic actuated and so are the rotor locks. The hydraulic connections are made inside the inner stator segment space before the main shaft. The shape and thickness of the brake and lock is determined after specific requirements from rotor lock and rotor break torques.

Fig. 14 illustrates a main shaft 1400. The main shaft acts to transfer the torque and other forces to the bed frame of the structure. It is a cast piece and is provided with two flanges in the middle of its axial length. The drive end flange is used to anchor the rotor lock and break bracket while the non-drive end flange is used to bolt the stator anchor plate. It may also be provided with bolt holes on the drive and non-drive end for connection to the main bearing and the bed frame respectively. The sizing and actual shape may be determined after a detailed calculation on the static and fatigue behavior of the structure.

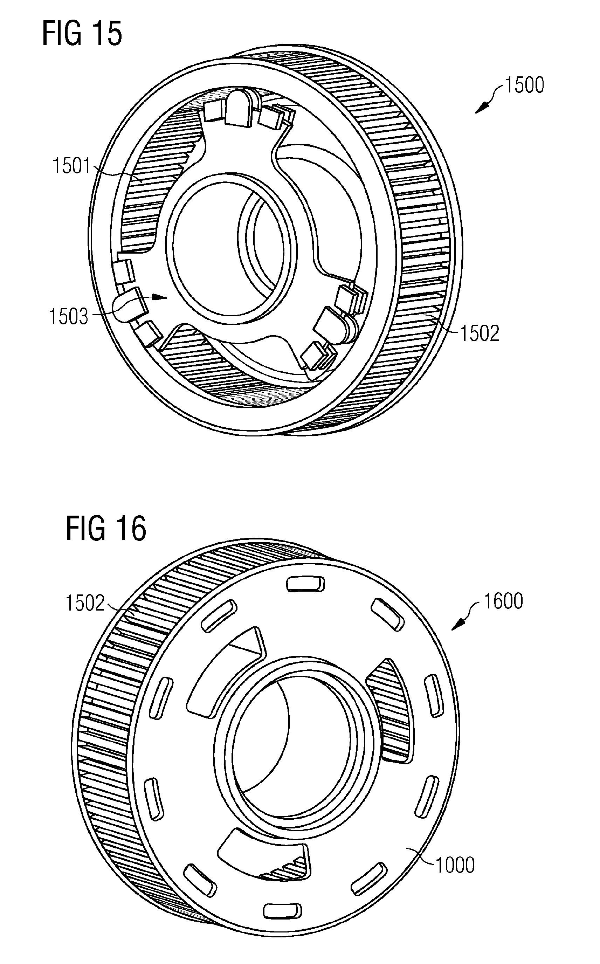

Figs. 15 and 16 illustrate an assembled stator assembly 1500, 1600. The stator assembly as explained above consists of the main shaft, the outer stator segments 1502, the inner stator segments 1501, stator anchor plate 1000 and the brake/lock assembly. The stator anchor plate may be bolted (and/or assembled with dowel pins) to the main shaft at the provided shaft flange. Then the inner and outer stator segments are assembled, for instance using dowel pins and bolts, to the stator anchor plate. Then liquid cooling connections (not shown here) and other internal assemblies will be put in. Then the brake and lock assembly is bolted to the drive end of the main shaft with bolts and dowel pins. All electrical connections can now be made on the drive end of the stator assembly.

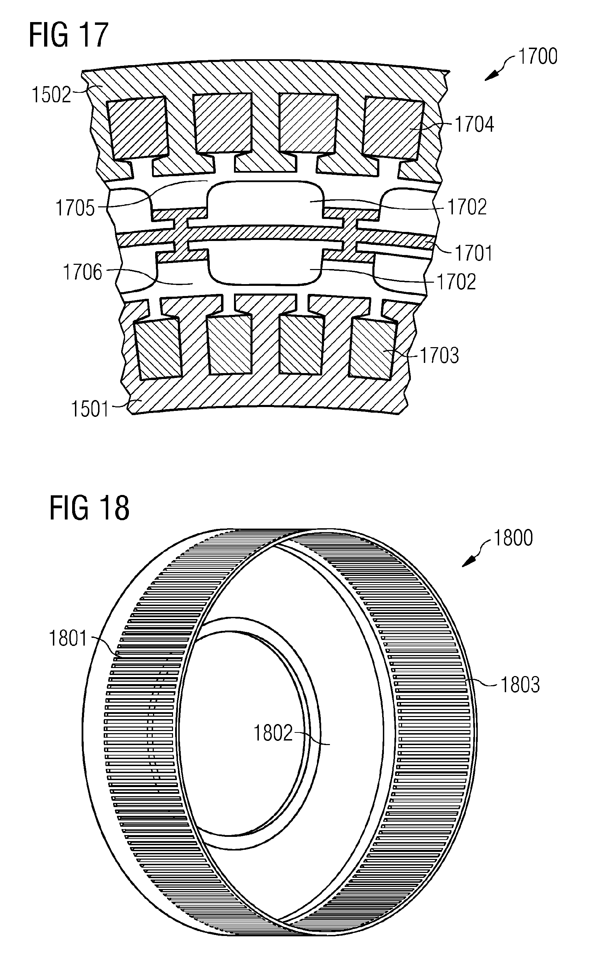

Fig. 17 illustrates a schematic view of the generator assembly 1700 showing also the rotating assembly 1701 having magnets 1702. Airgaps 1705, 1706 are provided between the stator assemblies and the rotating assembly. The outer stator assembly 1502 has outer stator slot windings 1704 and the inner stator assembly 1501 has inner stator slot windings 1703.

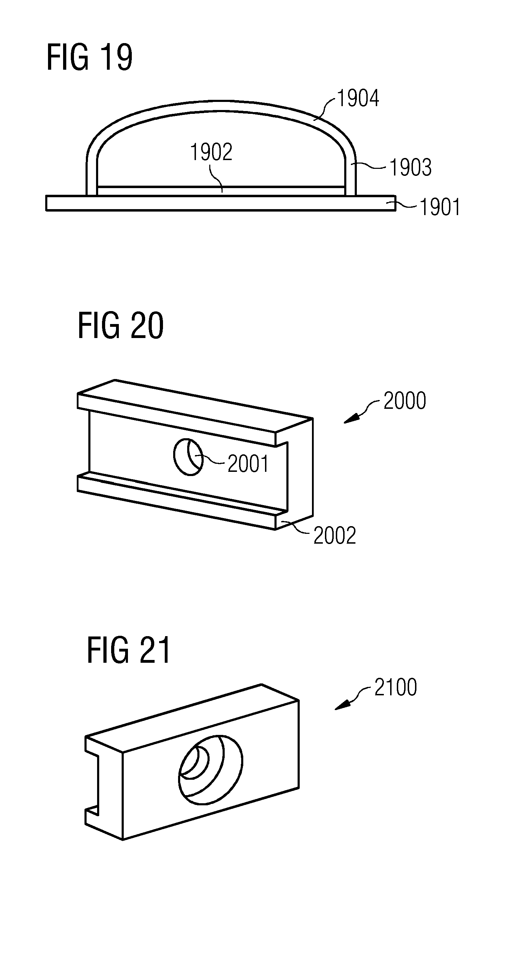

Fig. 18 illustrates a rotor assembly 1800. The rotor house is constructed so that there are magnet grooves 1801, 1802 on the inner and outer diameters of its barrel structure. The magnet grooves are made so that they comply with the magnet modules to be used for this assembly as shown in Fig. 19. It also has two front plates 1803 that would transfer the torque from the drive end to the magnet surfaces. The front plates are welded to a barrel cylindrical structure. The rotor house also has a bearing pocket on to which the main bearing may be bolted to. The rotor house may have at least one tapped hole per magnet on the non-drive end so that the magnet anchors can be bolted to keep the magnets from axial displacement.

The magnet modules as shown in Fig. 19 comprise a permanent magnet 1903 which is glued 1902 to a base plate 1901, for instance a stainless steel plate. The magnet is covered with a magnet cover 1904, for instance also stainless steel.

Magnet anchors 2000, 2100 as shown in Figs. 20 and 21 may be used for anchoring the magnet modules. The magnet anchor is a small piece of metal that has a counter-bored hole 2001 to house hex head cap screws. These magnet anchors are assembled after an outer and inner magnet modules are assembled onto the rotor house. Using a flange 2002, they may keep the magnets (both outer and inner) from slipping in the axial direction during operation.

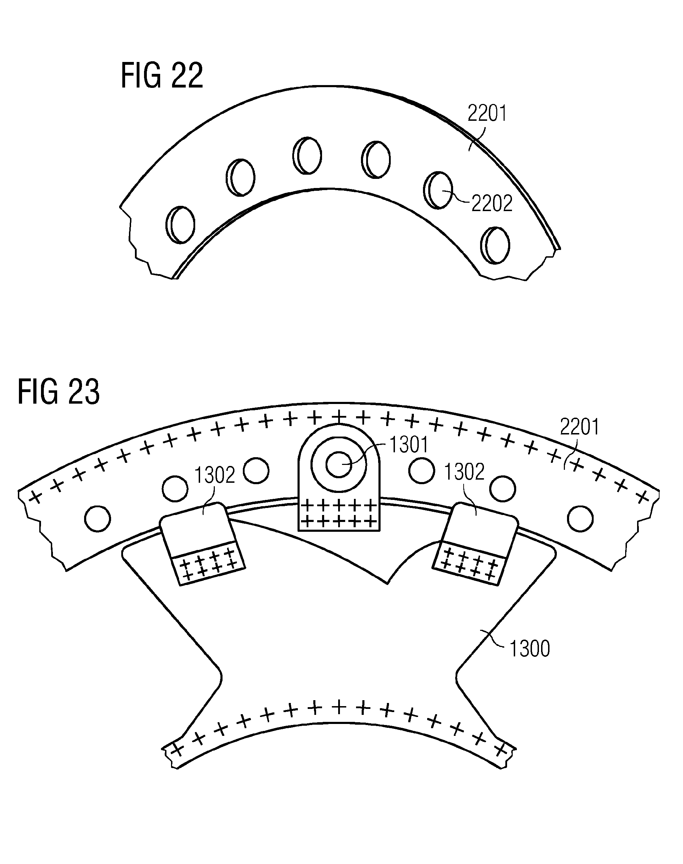

A brake disc 2201 is shown in Figs. 22 and 23. This disc is used to brake and lock the rotor from movement. It has a number of lock holes 2202 on the inner periphery and also has bolt holes on the outer periphery. It is bolted to the inner flange of the rotor house and the lock assembly is then mounted to the brake and lock bracket as shown in Fig. 23.

A rotor sub-assembly may house the main bearing, the rotor house, the brake disc, the outer and inner magnet modules and the magnet anchor plates. For assembling, the rotor house and the main bearing are assembled first and bolted together. Then the brake disc is bolted to the inner flange provided. Then the rotor house is ready for assembly to the stator sub-assembly.

In a final step, the generator assembly is put together consisting of the stator sub-assembly and the rotor sub-assembly.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A dual stator permanent magnet generator (100) for a wind turbine, the generator (100) comprising
an inner stator assembly (102) having a first surface and a second surface opposite the first surface,
an outer stator assembly (101) having a first surface and a second surface opposite the first surface, and
a rotating assembly (103) having a first surface and a second surface opposite the first surface and being arranged between the inner stator assembly and the outer stator assembly,
wherein the second surface of the inner stator assembly comprises recesses (104) for receiving windings and wherein the second surface of the inner stator assembly faces the rotating assembly,
wherein the first surface of the outer stator assembly comprises recesses (104) for receiving windings and wherein the first surface of the inner stator assembly faces the rotating assembly, and
wherein the first and the second surface of the rotating assembly are configured to receive permanent magnet module elements (105) in order to induce currents in the windings of the inner stator assembly and the outer stator assembly during a rotation of the rotating assembly.

2. The dual stator permanent magnet generator (100) as set forth in claim 1, wherein the inner stator assembly (102) and the outer stator assembly (101) each comprise a cooling element (300, 700) for providing a liquid cooling to the stator assemblies.

3. The dual stator permanent magnet generator (100) as set forth in claim 2,
wherein the inner stator assembly (102) and the outer stator assembly (101) each comprise a cooling support element as cooling element,
wherein each cooling support element comprises
a first plate (301) having an upper surface and a lower surface, wherein the upper surface of the first plate comprises anchoring means for anchoring a stator lamination stack (200, 600 being attachable to the cooling support element,
a second plate (304, 701) having an upper surface and a lower surface, wherein the lower surface of the second plate comprises an inlet opening and an outlet opening (302, 702),
wherein the first plate is attached to the second plate in such a manner that the lower surface of the first plate faces the upper surface of the second plate,
wherein separator elements are disposed between the lower surface of the first plate and the upper surface of the second surface such that a cooling channel is provided between the first plate and the second plate, and
wherein a cooling fluid is guidable from the inlet opening through the cooling channel to the outlet opening for dissipating heat from the stator lamination stack,
wherein the first surface of the inner stator assembly (102) is part of the cooling element of the inner stator assembly and wherein the second surface of the outer stator assembly (101) is part of the cooling element of the outer stator assembly.

4. The dual stator permanent magnet generator (100) as set forth in any one of the claims 2 or 3, wherein the cooling elements are connectable to at least one pumping station being arrangeable inside the inner stator assembly (102).

5. The dual stator permanent magnet generator (100) as set forth in any one of the preceding claims, further comprising a stator assembly anchor plate (1000) being adapted to attach the stator assemblies (101, 102) to a main shaft (1400) of the generator.

6. The dual stator permanent magnet generator (100) as set forth in claim 5, wherein the stator assembly anchor plate (1000) comprises attachment means being adapted to match with corresponding attachment means of the stator assemblies.

7. The dual stator permanent magnet generator (100) as set forth in claim 6, wherein the attachment means are tapped bolt holes and/or dowel pin holes and/or through bolt holes.

8. The dual stator permanent magnet generator (100) as set forth in any one of the claims 5 to 7, wherein the stator assembly anchor plate (1000) comprises openings (1001, 1002) for inserting permanent magnets into the generator.

9. The dual stator permanent magnet generator (100) as set forth in claim 8, wherein the stator assembly anchor plate (1000) comprises further openings (1003) for accessing the generator from the non-drive end.

10. The dual stator permanent magnet generator (100) as set forth in any one of the preceding claims, further comprising a brake disc (2201) being arranged on the front end of the rotating assembly (103) for braking and/or locking the generator during operation.

11. The dual stator permanent magnet generator (100) as set forth in any one of the preceding claims, wherein the inner stator assembly (102) and the outer stator assembly (101) are electromagnetically driven to provide two separate generators.

12. The dual stator permanent magnet generator (100) as set forth in any one of the claims 1 to 10, wherein the inner stator assembly (102) and the outer stator assembly (101) are electromagnetically driven as one generator.

13. The dual stator permanent magnet generator (100) as set forth in any one of the preceding claims, wherein the inner stator assembly (102), the outer stator assembly (101) and the rotating assembly (103) are each formed as a plurality of segments.

14. The dual stator permanent magnet generator (100) as set forth in any one of the preceding claims, wherein the inner stator assembly (102), the outer stator assembly (101) and the rotating assembly (103) are arranged such that a first airgap (106) is provided between the inner stator assembly and the rotating assembly and a second airgap (106) is provided between the outer stator assembly and the rotating assembly.

15. Method of manufacturing a dual stator permanent magnet generator for a wind turbine, the method comprising
providing an inner stator assembly having a first surface and a second surface opposite the first surface,
providing an outer stator assembly having a first surface and a second surface opposite the first surface, and
providing a rotating assembly having a first surface and a second surface opposite the first surface and being arranged between the inner stator assembly and the outer stator assembly,
wherein the second surface of the inner stator assembly comprises recesses for receiving windings,
wherein the first surface of the outer stator assembly comprises recesses for receiving windings,
arranging the inner stator assembly such that the second surface of the inner stator assembly faces the rotating assembly, and
arranging the outer stator assembly such that the first surface of the inner stator assembly faces the rotating assembly,
wherein the first and the second surface of the rotating assembly are configured to receive permanent magnet module elements in order to induce currents in the windings of the inner stator assembly and the outer stator assembly during a rotation of the rotating assembly.
